(19) Europäisches Patentamt

European Patent Office

Office européen des brevets

(11) **EP 1 296 157 B1**

(12) **EUROPÄISCHE PATENTSCHRIFT**

(45) Veröffentlichungstag und Bekanntmachung des Hinweises auf die Patenterteilung:
**31.05.2006 Patentblatt 2006/22**

(51) Int Cl.:
**G01S 13/90** (2006.01)    **G01S 7/40** (2006.01)

(21) Anmeldenummer: **02016541.1**

(22) Anmeldetag: **24.07.2002**

(54) **Verfahren zur Kalibrierung der Radarsignale an den Subaperturen der Antenne eines zweikanaligen SAR/MTI Radarsystems**

Method for calibrating radar signals from the sub-apertures of the antenna of a two-channel SAR/MTI radar system

Procédé d'étalonnage des signaux radar des sous-ouvertures de l'antenne d'un système radar SAR/MTI à deux voies

(84) Benannte Vertragsstaaten:
**DE FR GB IT**

(30) Priorität: **21.09.2001 DE 10146643**

(43) Veröffentlichungstag der Anmeldung:
**26.03.2003 Patentblatt 2003/13**

(73) Patentinhaber: **EADS Deutschland GmbH
85521 Ottobrunn (DE)**

(72) Erfinder:
• **Bickert, Bernhard
89079 Ulm-Einsingen (DE)**
• **Meyer-Hilberg, Jochen, Dr.
89275 Elchingen (DE)**

(74) Vertreter: **Meel, Thomas
Patentassessor,
c/o Dornier GmbH
L H G
88039 Friedrichshafen (DE)**

(56) Entgegenhaltungen:
**US-A- 6 144 333**

• **SHUNJUN WU ET AL: "Adaptive channel equalization for space-time adaptive processing" RECORD OF THE IEEE 1995 INTERNATIONAL RADAR CONFERENCE (CAT. NO.95CH-3571-0), PROCEEDINGS INTERNATIONAL RADAR CONFERENCE, ALEXANDRIA, VA, USA, 8-11 MAY 1995, Seiten 624-628, XP001157585 1995, New York, NY, USA, IEEE, USA ISBN: 0-7803-2121-9**

**Beschreibung**

Die Erfindung betrifft ein Verfahren zur Kalibrierung der Radarsignale an den Subaperturen der Antenne eines zweikanaligen SAR(Synthetic Apertur)/MTI(Moving Target Indication) Radarsystems gemäß dem Oberbegriff des Patentanspruchs 1.

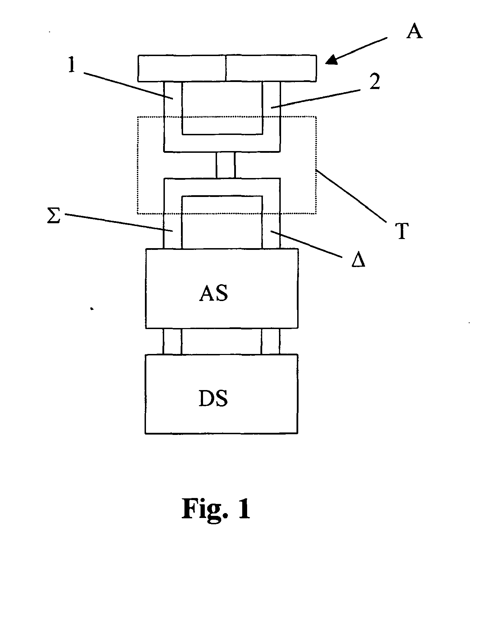

Es ist allgemeiner Stand der Technik, dass in einem zweikanaligen Radarsystem die beiden Subaperturkanäle (1, 2) einer Antenne (A), im Antennenfrontend, mittels eines Hohlleiterteils (T), üblicherweise ein sogenanntes MagicT, zu einem Summen-($\Sigma$) und Differenzkanal ($\Delta$) zusammengefaßt werden können. Eine derartige Anordnung ist in Fig. 1 dargestellt. In Fig. 1 ist darüber hinaus gezeigt, dass der Summen-($\Sigma$) und Differenzkanalsignale ($\Delta$) einer analogen (AS) und digitalen Signalaufbereitung (DS) zugeführt werden.

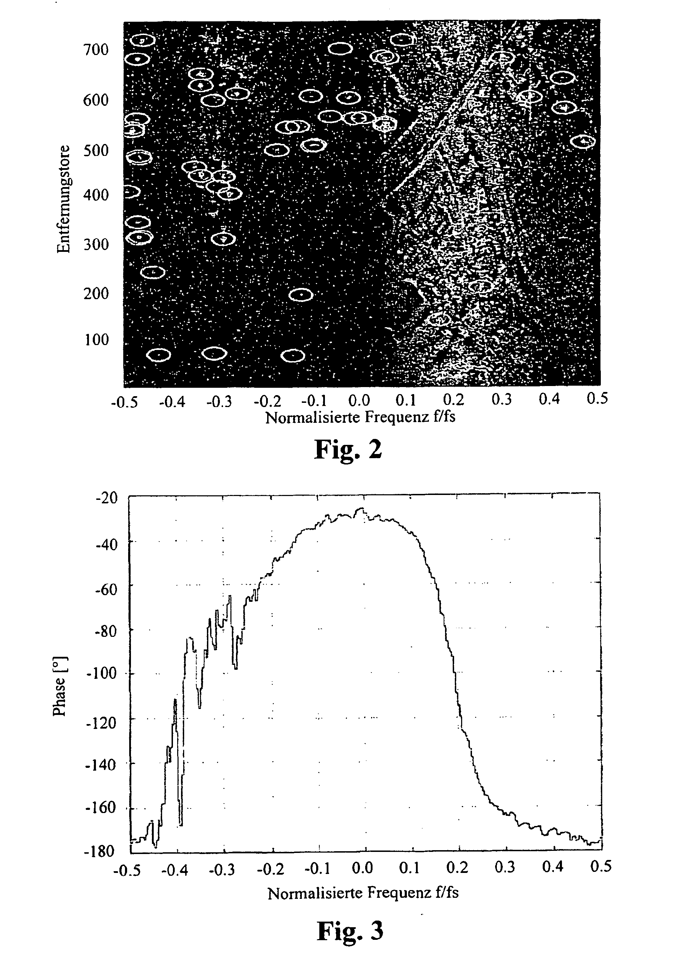

In der digitalen Signalverarbeitung eines SAR- Radars wird das Summenkanalsignal dazu verwendet, sogenannte Radarbodenkarten zu erstellen. In der digitalen Signalverarbeitung eines MIT-Radars wird das Summenkanalsignal dazu verwendet, eine Detektion und Erkennung (Indikation) von bewegten Zielen (moving targets) in Radarbodenkarten ähnlichen Bildern durchzuführen. Fig. 2 zeigt hierzu ein typisches, mit dem MTI-Verfahren erzeugtes Entfernung-Dopplerbild im Summenkanal nach Detektion von Fest- und Bewegtzielen. Dabei sind die Signalleistungen über den Entfernungstoren und der normalisierten Frequenz f/f$_s$ aufgetragen. In dem dargestellten Diagramm ist deutlich zu erkennen, dass der Bereich des Antennenleuchtflecks (heller Bereich), auch als Hauptkeulenclutter bezeichnet, aufgrund einer Relativgeometrieänderung während der Beleuchtungszeit, gegenüber der Dopplerfrequenzposition Null verschoben ist. Die in dem Bild dargestellten Kreise bezeichnen die detektierten Fest- und Bewegtziele. In Fig. 2 befindet sich die Dopplerfrequenzposition des Hauptkeulenclutters beispielhaft bei einer normalisierten Frequenz von 0,2.

Während in der SAR- Radarsignalverarbeitung das Differenzkanalsignal nicht weiter verwendet wird, wird in der entsprechenden MIT- Radarsignalverarbeitung das Differenzkanalsignal dazu benötigt, zum Einen eine Trennung von Fest- und Bewegtzielen zu erreichen und zum Anderen eine Repositionierung der, bezüglich der Dopplerfrequenz verschobenen, bewegten Ziele durchzuführen.

Ein Verfahren zur Festzielunterdrückung ist z.B. das sogenannte STAP(Space Time Adaptive Processing) Verfahren. Um eine möglichst hohe Bewegtzielunterdrückung zu erzielen, ist es notwendig, dass die Subaperturkanalsignale in Amplitude exakt gleich sind und sich in der Phase nur durch einen, durch die Relativgeometrie und Antennenanordnung bedingten Phasenwert unterscheiden. Zur Bewegtzielrepositionierung ist es ebenfalls nötig, unterschiedliche Phasendifferenzen zwischen den Subaperturkanalsignalen, die zu Fehlpositionierungen führen, zu kompensieren. Eine übliche Methode zur Bestimmung der Kompensationsfaktoren von Amplitude und Phase, ist die Benutzung von definierten Testsignalen, die in das Hohlleiterteil eingespeist, beziehungsweise über die Antenne eingestrahlt werden. Dies geschieht vor dem eigentlichen Einsatz der Radarantenne. Die Summen- und Differenzkanalsignale hinter dem Hohlleiterteil werden danach in die Eingangssignale vor dem Hohlleiterteil, also in die Signale der beiden Subaperturkanäle zurückgerechnet. Sind die Korrekturfaktoren korrekt bestimmt worden, so sind die beiden Signale identisch. Die Faktoren werden im Speicher der digitalen Signalverarbeitung abgelegt und während des Einsatzes der Radarantenne aus diesem ausgelesen. Ein derartiges Verfahren ist von Shunjun W. et al. in "Adaptive Channel Equalization für Space-Time Adaptive Processing"; IEEE International Radar Conference 1995 beschrieben worden.

Die Berechnung der Signale der Subaperturkanäle erfolgt üblicherweise gemäß folgender Gleichungen:

$$x_1(t) = \frac{x_s(t) - x_d(t)}{2} \qquad\qquad \text{(a)}$$

$$x_2(t) = \frac{x_s(t) + x_d(t)}{2} \qquad\qquad \text{(b)}$$

mit

$x_1(t)$, $x_2(t)$ : Zeitsignal der beiden Subaperturkanäle,
$x_s(t)$, $x_d(t)$ : Zeitsignal Summen- und Differenzkanal.

Nachteilig hierbei ist, dass diese Vorgehensweise vorab durchgeführt werden muß und dass Amplituden- und Phasengleichlaufunterschiede, die während des laufenden Betriebs auftreten, nicht mehr korrigiert werden können. Nachteilig ist ebenfalls, dass im laufenden Betrieb Testsignale eingespeist werden müssen, was zu einem höheren Aufwand und zu einer möglichen Unterbrechung der kohärenten digitalen Signalverarbeitung führt.

Aufgabe der Erfindung ist es, ein Verfahren anzugeben, mit dem eine gegenüber dem Stand der Technik verbesserte Rückrechnung des Summen- und Differenzkanalsignals auf das am Ausgang der beiden Subaperturen vorliegende Signal möglich ist. Eine weitere Aufgabe der Erfindung besteht darin, ein Verfahren anzugeben, welches ohne ein Testsignal auskommt und während des laufenden Betriebs aus den Radarsignalen zur Bilderzeugung adaptiv die Korrekturfaktoren berechnet und die Korrektur durchführt.

Diese Aufgabe wird mit dem Verfahren gemäß Patentanspruch 1 gelöst. Vorteilhafte Ausführungen des Verfahrens sind Gegenstand von Unteransprüchen.

Erfindungsgemäß werden aus dem amplituden- und phasenverschobenen Summen- und Differenzkanalsignal durch Einsetzen in folgende Gleichungen die Signale der beiden Subaperturkanäle berechnet:

$$X_1(r, f) = \frac{X_S(r, f) - X_D(r, f) \cdot \exp(-j\Phi_0)}{2} \qquad (1)$$

$$X_2(r, f) = a_0 \cdot \left( \frac{X_S(r, f) + X_D(r, f) \cdot \exp(-j\Phi_0)}{2} \right) \qquad (2)$$

mit

$X_1(r, f)$, $X_2(r, f)$ : Frequenzspektrum der beiden Subaperturkanäle,
$X_S(r, f)$, $X_D(r, f)$ : Frequenzspektrum von Summen- und Differenzkanal,
r: Entfernungszelle,
f : Dopplerfrequenz
$\Phi_0$ : Phasenkorrekturfaktor,
$a_0$ : Amplitudenkorrekturfaktor.

Mit dem Phasenkorrekturfaktor $\Phi_0$ wird dabei die Phasendifferenz zwischen Summen- und Differenzkanal bestimmt.

Die Erfindung sowie vorteilhafte Ausführungen der Erfindung werden im weiteren anhand von Diagrammen näher erläutert. Es zeigen:

Fig. 1     ein Blockschaltbild mit dem Signalverlauf nach den beiden Subaperturen im Frontend bis zur digitale Signalverarbeitung,

Fig. 2     ein beispielhaftes Entfernungs-Dopplerbild im Summenkanal nach der Detektion der Fest/Bewegtziele,

Fig. 3     den beispielhaften Verlauf der Phasendifferenz zwischen Summen- und Differenzkanal über der normalisierten Frequenz,

Fig. 4     den Verlauf der Phasendifferenz gemäß Fig. 3 in einem Ausschnitt um die Dopplerfrequenzposition des Hauptkeulenclutters, sowie den Verlauf der Phasendifferenz zwischen Summen- und Differenzkanal nach der Phasenkorrektur,

Fig. 5     den beispielhaften Verlauf der Signalleistungen der beiden Subaperturkanäle über der normalisierten Frequenz.

Zur Schätzung des Phasenkorrekturfaktors $\Phi_0$ werden erfindungsgemäß folgende Berechnungsschritte durchgeführt:

-     Berechnung der Dopplerfrequenzposition des Hauptkeulenclutters,
-     Korrektur der Summen- und Differenzkanalsignals $X_S(r, t)$, $X_D(r, t)$, wobei für jedes der verschiedenen Entfernungstore in der Phase eine Verschiebung des Summen- und Differenzkanalsignals als Funktion über der Pulswiederholzeit in die Frequenznulllage erfolgt,
-     Filtern der, in die Nullage geschobenen Summen- und Differenzkanalsignale mittels eines Tiefpasses zur Unterdrückung von hochfrequentem Phasenrauschens
-     Abtastratenreduktion der Summen- und Differenzkanalsignale zur Reduktion der Rechenleistung und Erhöhung der spektralen Auflösung,
-     Transformation des gefilterten Summen- und Differenzkanalsignale $X_S(r, t)$, $X_D(r, t)$mittels einer gefensterten Fast-Fourier-Transformation (FFT) in den Dopplerfrequenzbereich,

- Berechnung der Kreuzkorrelation des Summen- und Differenzkanalsignale $X_S(r, f)$, $X_D(r, f)$ über die verschiedenen Entfernungstore, wobei diese Berechnung für jede Dopplerfrequenzposition erfolgt,
- Ermittlung des Verlaufs der Phasendifferenz zwischen Summen- und Differenzkanal $X_S(r, f)$, $X_D(r, f)$ aus den in Schritt 5 berechneten Korrelationen über den in Schritt 1 adaptiv berechneten Frequenzbereich,
- Bestimmung des Phasenkorrekturfaktors $\Phi_0$ durch Berechnung des aritmetischen Mittelwertes der Phasendifferenz zwischen Summen- und Differenzkanal über den in Schritt 1 adaptiv berechneten Frequenzbereich des Hauptkeulenclutters.

Für die Bestimmung des Phasenkorrekturfaktors $\Phi_0$ wird bevorzugt der Bereich der größten Energie im Summen- und Differenzkanal MTI-Bild herangezogen. Dieser Bereich größter Energie ist insbesondere der Bereich der Hauptkeule der Antenne.

Die Berechnung der Dopplerfrequenzposition des Hauptkeulenclutters im ersten Berechnungsschritt kann dabei mit dem Verfahren in der nicht vorveröffentlichten Patentanmeldung DE 101 24 865.2 erfolgen. Dieser Bereich wird erfindungsgemäß aus den Radardaten adaptiv geschätzt.

Die Korrektur der Summen- und Differenzkanalsignale $X_S(r, t)$, $X_D(r, t)$ im zweiten Berechnungsschritt wird auch als sogenanntes Deramping-Verfahren bezeichnet. Dabei wird für jedes der verschiedenen Entfernungstore in der Phase eine Verschiebung des Summen- und Differenzkanalsignals als Funktion über der Pulswiederholzeit t in die Frequenznulllage durchgeführt. Dies erfolgt entsprechend folgender Gleichung:

$$X_S(r,t) = X_S(r,t) \cdot \exp(-j\Phi_{Clutter}) \qquad (3)$$

mit $\Phi_{Clutter}$ :zugehörige Phase der mittleren spektralen Hauptkeulenclutterposition,

Sobald die Summen- und Differenzkanalsignale in die Frequenznulllage geschoben worden sind, werden diese vorteilhaft zur Unterdrückung von hochfrequentem Phasenrauschen tiefpassgefiltert. Dadurch reduziert sich ebenfalls die Bandbreite der Signale. Die Tiefpassfilterung erfolgt im dritten Rechenschritt.

Die Bandbreitenreduktion wird ausgenutzt um eine Reduktion der Anzahl der Signalwerte, eine sogenannte Abtastratenreduktion, durchzuführen. Somit ergibt sich vorteilhaft eine Reduktion der Rechenzeit bei gleicher spektraler Auflösung, bzw. vorteilhaft eine Erhöhung der spektralen Auflösung bei Erhöhung der Anzahl der reduzierten Signalwerte. Die Abtastratenreduktion wird im vierten Rechenschritt durchgeführt.

Innerhalb einer Entfernungszelle befinden sich in den Summen- und Differenzkanalzeitsignalen mehrere Punktziele, die sich hinsichtlich Amplitude und Phase unterscheiden. Diese können aber im Zeitsignal nicht aufgelöst werden. Vorteilhaft wird in einem fünften und sechsten Berechnungsschritt somit eine Transformation der gefilterten Summen- und Differenzkanalsignale in den Spektralbereich, den sogenannten Dopplerfrequenzbereich durchgeführt. Die Transformation erfolgt vorteilhaft mittels einer gefensterten Fourier Fast Transformation (FFT). Hieraus ergibt sich, dass die einzelnen Punktziele hinsichtlich ihrer Frequenz, d.h. der zeitlichen Ableitung der Phase unterschieden werden können.

Eine FFT kann dabei als eine Anordnung von mehreren Frequenzteilbändern angesehen werden. Jedes Frequenzteilband besitzt dabei eine Sperrdämpfung von ca.14 dB, entsprechend der Impulsantwort eines Rechteckfensters. Das bedeutet, dass Amplituden des Nachbarfrequenzbandes mit einer Dämpfung von ca. 14 dB ebenfalls durchgelassen werden. Werden die Zeitsignale vorteilhaft mittels einer Fensterfunktion hoher Sperrdämpfung gefenstert, so ergibt sich ein nahezu unverfälschtes Spektralsignal in jedem Frequenzband.

Mittels der gefensterten FFT sind aus den Entfernungs-Zeit-(slow time) Bildern Entfernungs-Dopplerfrequenzbilder entstanden. Für jede Dopplerfrequenzposition wird in einem sechste Berechnungsschritt das Summen- und Differenzkanalspektrum als Funktion über die einzelnen Entfernungstore miteinander kreuzkorreliert. Das bedeutet, dass die komplexen Vektoren der Signale miteinander multipliziert und aufsummiert werden. Das Ergebnis ist ein komplexer Wert für jede Dopplerfrequenzposition. Dieser komplexe Wert besitzt einen Realteil Re und einem Imaginärteil Im. Die Phase dieses Wertes in der Einheit Grad berechnet sich aus:

$$\Phi = \tan^{-1}\left(\frac{Im}{Re}\right)\frac{180}{\pi} \,.$$

Sie wird im Folgenden als Differenzphase bezeichnet.

Die Berechnung der Phasen für jede Dopplerfrequenzposition ergibt dann in einem siebten Schritt einen Verlauf, der die Phasendifferenz zwischen Summen- und Differenzkanalspektrum angibt. Fig. 3 zeigt einen beispielhaften Verlauf der Phasendifferenz zwischen Summen- und Differenzkanalspektrum im Hauptkeulenclutterbereich, wobei die Dopplerfrequenzposition des Hauptkeulenclutters entsprechend Fig. 2 bei 0,2 liegt. Aus Fig. 3 ergibt sich somit für dieses Beispiel für die mittlere Dopplerfrequenzposition des Hauptkeulenclutters eine Phasendifferenz von -110° zwischen dem Summen- und Differenzkanalspektrum. Diese Phasendifferenz, die abhängig von der Ausführung des MagicT z.B. 90° betragen kann, wird erfindungsgemäß mittels des Phasenkorrekturfaktors $\Phi_0$ im Spektrum korrigiert.

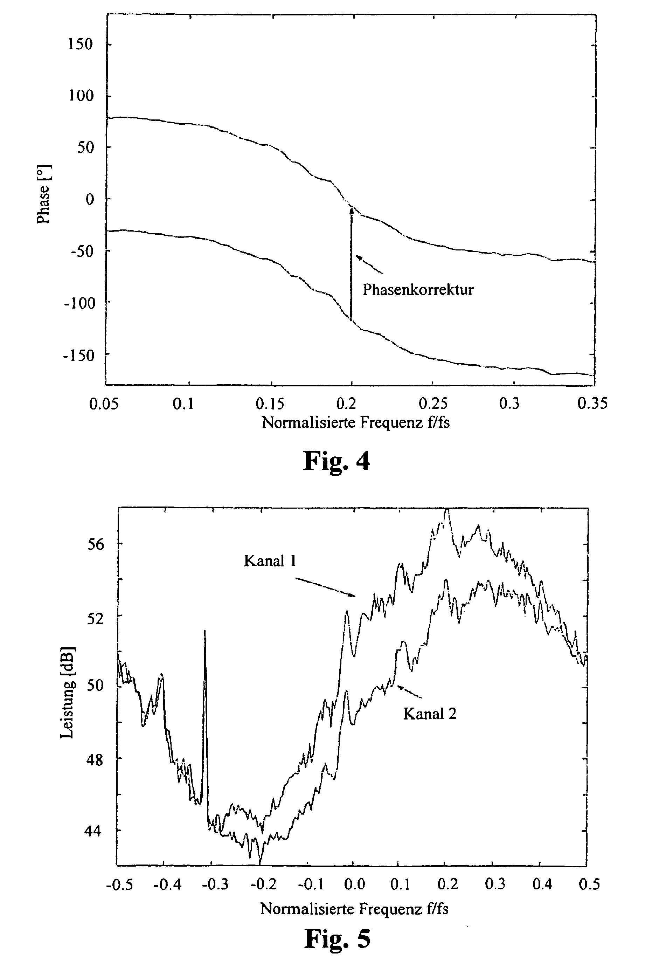

Zur Bestimmung des Phasenkorrekturfaktors $\Phi_0$ wird dann im achten Berechnungsschritt innerhalb des, im ersten Berechnungsschritts ermittelten, Dopplerfrequenzpositionsbereichs des Hauptkeulenclutters der arithmetische Mittelwert der Differenzphasenwerte berechnet. Dieser Mittelwert entspricht dem Phasenkorrekturfaktor $\Phi_0$. Fig. 4 zeigt einen vergrößerten Ausschnitt um die Dopplerfrequenzposition des Hauptkeulenclutters aus Fig. 3. Außerdem ist eine weitere Kurve eingezeichnet, welche dem, um den Phasenkorrekturfaktor $a_0$ korrigierten Verlauf der Phasendifferenz zwischen Summen- und Differenzkanalspektrum entspricht. Diese korrigierte Kurve weist bei der Dopplerfrequenzposition des Hauptkeulenclutters eine Phasendifferenz von 0° zwischen dem Summen- und Differenzkanalspektrum auf.

Der Amplitudenkorrekturfaktor $a_0$ wird erfindungsgemäß mittels folgender Berechnungsschritte geschätzt:

- Berechnung der Spektren für die beiden Subaperturkanäle gemäß Gleichungen (1) und (2) mit $a_0$=1,

- Berechnung je eines mittleren Leistungsdichtespektrums für den einen und den anderen Subaperturkanal durch geometrische Mittelung der mit Gleichung (1) und (2) berechneten Subaperturkanalspektren über verschiedene Entfernungstore,

- Berechnung der Differenz der Leistungsdichtespektren zwischen den, über verschiedene Entfernungstore gemittelten Subaperturkanalleistungsdichtespektren,

- Bestimmung des Amplitudenkorrekturfaktors $a_0$ durch Berechnung des arithmetischen Mittelwertes der Differenz über den in Schritt 1 der Phasenkorrekturberechnung adaptiv berechneten Frequenzbereich des Hauptkeulenclutters.

Im ersten Berechnungsschritt werden mittels des geschätzten Phasenkorrekturfaktors $\Phi_0$ die Frequenzspektren für die beiden Subaperturkanäle gemäß den Gleichungen (1) und (2) bestimmt, wobei der Amplitudenkorrekturfaktor $a_0$ auf 1 gesetzt wird. Im zweiten und dritten Berechnungsschritt werden aus den komplexen Frequenzspektren die Leistungsdichtespektren berechnet und diese vorteilhaft über eine vorgebbare Auswahl von Entfernungstoren geometrisch gemittelt, d.h. der Mittelwert der logarithmierten Leistungen berechnet.

In Fig. 5 ist ein beispielhafter Verlauf der Leistungsdichtespektren der beiden Subaperturkanäle (Kanal 1 und Kanal 2) über der normalisierten Frequenz $f/f_s$ dargestellt. Da im ersten Berechnungsschritt der Amplitudenkorrekturfaktor $a_0$=1 beträgt, weichen die Kurvenverläufe der beiden Leistungsdichtespektren voneinander ab.

In einem vierten Berechnungsschritt wird der geometrische Mittelwert der Differenz der gemittelten Leistungsdichtespektren innerhalb des Dopplerfrequenzpositionsbereichs des Hauptkeulenclutters bestimmt.

Der in dem zweiten, dritten und vierten Berechnungsschritt geschätzte Amplitudenkorrekturfaktor $a_0$ gibt somit an, um wieviel die Leistungsdichtespektren der beiden Subaperturkanalspektren zumindest im Bereich des Hauptkeulenclutters konstant voneinander abweichen.

In einer weiteren vorteilhaften Ausführung der Erfindung erfolgt die Stabilisierung der Schätzung der konstanten Phasen- und Amplitudenkorrekturfaktoren rekursiv von Signalpulspaket zu Signalpulspaket. Dabei wird eine Häufigkeitsverteilung der Schätzwerte berechnet und der Wert mit der größten Häufigkeit als Schätzwert weiterverwendet.

Ein Vorteil der Erfindung ist, dass der Summen- und Differenzkanal mittels digitaler Signalverarbeitung in die Einzelkanäle der Subapertur zurückgerechnet werden kann, ohne dass Veränderungen an der Antenne (Frontend) vorgenommen werden müssen. Diese Berechnungen erfolgen während des gewöhnlichen Betriebs der Antenne, ohne dass die kohärente Signalverarbeitung unterbrochen werden muß. Ein wesentlicher Vorteil der Erfindung ist, dass kein Testsignal zur Berechnung benötigt wird, sondern dies auf den Radardaten selbst geschieht. Außerdem liefert das erfindungsgemäße Verfahren auch bei einem schlechtem Signal/Rauschverhältnis sehr gute Ergebnisse.

Ein weiterer Vorteil ist, dass für das erfindungsgemäße Verfahren keine Kenntnis der Gleichlaufeigenschaften der Kanäle benötigt wird. Sofern die Gleichlaufunterschiede der Kanäle zeitabhängig sind, wird dies durch die Adaptivität des erfindungsgemäßen Verfahrens berücksichtigt, indem das Verfahren in jedem n-ten Rechenschritt angewendet wird und die Schätzwerte mit der größten Wahrscheinlichkeit verwendet werden.

Das erfindungsgemäße Verfahren läßt sich auch auf andere Signale außer Radarsignale übertragen.

**Patentansprüche**

1. Verfahren zur Berechnung der am Ausgang von zwei Subaperturen einer Antenne (A) eines zweikanaligen Radarsystems vorliegenden Radarsignale, wobei die beiden Subaperturkanäle (1, 2) mittels eines Hohlleiterteils (T) zu einem Summen- ($\Sigma$) und Differenzkanal ($\Delta$) zusammengefaßt sind und wobei zur Berechnung der Radarsignale an den Subaperturkanälen (1, 2) die Signale des Summen- ($\Sigma$) und Differenzkanals ($\Delta$) verwendet werden, **dadurch gekennzeichnet, dass** aus dem amplituden- und phasenverschobenen Summen- und Differenzkanalsignal ein konstanter Amplitudenkorrekturfaktor $a_0$ und ein konstanter Phasenkorrekturfaktor $\Phi_0$ geschätzt und mittels Einsetzen in folgende Gleichungen die Signale der beiden Subaperturkanäle (1, 2) berechnet werden:

$$X_1(r,f) = \frac{X_S(r,f) - X_D(r,f) \cdot \exp(-j\Phi_0)}{2} \tag{1}$$

$$X_2(r,f) = a_0 \cdot \left( \frac{X_S(r,f) + X_D(r,f) \cdot \exp(-j\Phi_0)}{2} \right) \tag{2}$$

$X_1(r, f)$, $X_2(r, f)$: Frequenzspektrum der beiden Subaperturkanäle,
$X_S(r, f)$, $X_D(r, f)$ : Frequenzspektrum von Summen- und Differenzkanal,
r: Entfernungszelle,
f: Dopplerfrequenz
$\Phi_0$ : Phasenkorrekturfaktor,
$a_0$ : Amplitudenkorrekturfaktor,
wobei die Schätzung des Phasenkorrekturfaktors $\Phi_0$ mittels folgender Berechnungsschritte:

- Berechnung der Dopplerfrequenzposition des Hauptkeulenclutters,
- Korrektur des Summen- und Differenzkanalsignals, wobei für jedes der verschiedenen Entfernungstore in der Phase eine Verschiebung des Summen- und Differenzkanalsignals als Funktion über der Pulswiederholzeit in die Frequenznulllage erfolgt,
- Filtern des korrigierten Summen- und Differenzkanalsignals mittels eines Tiefpass zur Unterdrückung von hochfrequentem Phasenrauschen,
- Abtastratenreduktion des Summen- und Differenzkanalsignals zur Reduktion der Verarbeitungszeit und/oder zur Erhöhung der spektralen Auflösung,
- Transformation des gefilterten Summen- und Differenzkanalsignals $X_S(r, t)$, $X_D(r, t)$ mittels einer gefensterten Fast-Fourier-Transformation (FFT) in den Dopplerfrequenzbereich,
- Berechnung der Kreuzkorrelation des Summen- und Differenzkanalsignals $X_S(r, f)$, $X_D(r, f)$ über die verschiedenen Entfernungstore, wobei diese Berechnung für jede Dopplerfrequenzposition erfolgt,
- Ermittlung des Verlaufs der Phasendifferenz zwischen Summen- und Differenzkanalsignalen $X_S(r, f)$, $X_D(r, f)$ aus den in Schritt 5 berechneten Korrelationen über den in Schritt 1 adaptiv berechneten Frequenzbereich,
- Bestimmung des Phasenkorrekturfaktors $\Phi_0$ durch Berechnung des aritmetischen Mittelwertes der Phasendifferenz zwischen Summen- und Differenzkanal über den in Schritt 1 adaptiv berechneten Frequenzbereich des Hauptkeulenclutters,

und die Schätzung des Amplitudenkorrekturfaktors $a_0$ mittels folgender Berechnungsschritte durchgeführt werden:

- Berechnung der Spektren für die beiden Subaperturkanäle gemäß Gleichungen (1) und (2) mit $a_0$=1,
- Berechnung eines mittleren Spektrums für den einen und den anderen Subaperturkanal durch geometrische Mittelung der mit Gleichung (1) und (2) berechneten Spektren über verschiedene Entfernungstore,
- Berechnung eines mittleren Differenzspektrums aus dem mittleren Spektrum des einen und des anderen Subaperturkanals,
- Bestimmung des Amplitudenkorrekturfaktors $a_0$ durch Berechnung des arithmetischen Mittelwertes der Differenz über den in Schritt 1 der Phasenkorrekturberechnung adaptiv berechneten Frequenzbereich des Hauptkeulenclutters.

2. Verfahren nach Anspruch 1, **dadurch gekennzeichnet, dass** die Schätzung auf einem Paket von Signalpulsen erfolgt, wobei für jedes Pulspaket eine Häufigkeitsverteilung der Schätzwerte berechnet und der Wert mit der größten Häufigkeit als Schätzwert verwendet wird.

**Claims**

1. Method for calculation of the radar signals which are produced at the output of two subapertures of an antenna (A) of a two-channel radar system, with the two subaperture channels (1, 2) being combined by means of a waveguide element (T) to form a sum channel ($\Sigma$) and a difference channel ($\Delta$), and with the signals from the sum channel ($\Sigma$) and from the difference channel ($\Delta$) being used to calculate the radar signals at the subaperture channels (1, 2), **characterized in that** a constant amplitude correction factor $a_0$ and a constant phase correction factor $\Phi_0$ are estimated from the amplitude-shifted and phase-shifted sum and difference channel signal, and the signals of the two subaperture channels (1, 2) are calculated by substitution in the following equations:

$$X_1(r,f) = \frac{X_S(r,f) - X_D(r,f) \cdot \exp(-j\Phi_0)}{2} \qquad (1)$$

$$X_2(r,f) = a_0 \cdot \left( \frac{X_S(r,f) + X_D(r,f) \cdot \exp(-j\Phi_0)}{2} \right) \qquad (2)$$

where

$X_1(r, f)$, $X_2(r, f)$ : frequency spectrum of the two subaperture channels,
$X_S(r, f)$, $X_D(r, f)$ : frequency spectrum of the sum and difference channel,
r: range cell,
f: Doppler frequency
$\Phi_0$: phase correction factor,
$a_0$: amplitude correction factor,

where the estimate of the phase correction factor $\Phi_0$ is carried out by means of the following calculation steps:

- calculation of the Doppler frequency position of the main lobe clutter,
- correction of the sum and difference channel signal, with the sum and difference channel signal being shifted in phase as a function of the pulse repetition time to the frequency null position for each of the various range gates,
- filtering of the corrected sum and difference channel signal by means of a low-pass filter in order to suppress radio-frequency phase noise,
- sampling rate reduction of the sum and difference channel signal in order to reduce the processing time and/or in order to increase the spectral resolution,
- transformation of the filtered sum and difference channel signal $X_S(r, t)$, $X_D(r, t)$ by means of a windowed fast-Fourier transformation (FFT) to the Doppler frequency domain,
- calculation of the cross-correlation of the sum and difference channel signal $X_S(r, f)$, $X_D(r, f)$ over the various range gates, with this calculation being carried out for each Doppler frequency position,
- determination of the profile of the phase difference between the sum and difference channel signals $X_S(r, f)$, $X_D(r, f)$ from the correlations calculated in step 5, over the frequency range calculated adaptively in step 1,
- determination of the phase correction value $\Phi_0$ by calculation of the arithmetic mean value of the phase difference between the sum and difference channel over the frequency range, as adaptively calculated in step 1, of the main lobe clutter,

and the estimation of the amplitude correction factor $a_0$ is carried out by means of the following calculation steps:

- calculation of the spectra for the two subaperture channels using equations (1) and (2), with $a_0$=1,
- calculation of a mean spectrum for one and for the other subaperture channel by forming the geometric mean value of the spectra calculated using equations (1) and (2) over various range gates,
- calculation of a mean difference spectrum from the mean spectrum of one and of the other subaperture channel,
- determination of the amplitude correction factor $a_0$ by calculation of the arithmetic mean value of the difference over the frequency range of the main lobe clutter as calculated adaptively in step 1 of the phase correction calculation.

2. Method according to Claim 1, **characterized in that** the estimation process is carried out on a packet of signal pulses, with a probability distribution of the estimated values being calculated for each pulse packet, and with the value with the highest probability being used as the estimated value.

**Revendications**

1. Procédé de calcul des signaux radar se trouvant à la sortie de deux sous-ouvertures d'une antenne (A) d'un système radar bicanaux, les deux canaux de sous-ouverture (1,2) étant réunis au moyen d'un guide d'onde (T) en un canal somme ($\Sigma$) et un canal différence ($\Delta$) et les signaux du canal somme ($\Sigma$) et du canal différence ($\Delta$) étant utilisés pour calculer les signaux radar aux canaux de sous-ouverture (1,2), **caractérisé en ce qu'**un facteur correcteur d'amplitude constant $a_0$ et un facteur correcteur de phase constant $\Phi_0$ sont estimés à partir des signaux du canal somme et du canal différence déplacés en phase et en amplitude et les signaux des deux canaux de sous-ouverture (1,2) sont calculés moyennant l'utilisation dans les équations suivantes :

$$X_1(r,f) = \frac{X_S(r,f) - X_D(r,f) \cdot \exp(-j\Phi_0)}{2} \tag{1}$$

$$X_2(r,f) = a_0 \cdot \left( \frac{X_S(r,f) + X_D(r,f) \cdot \exp(-j\Phi_0)}{2} \right) \tag{2}$$

avec
$X_1(r,f)$, $X_2(r,f)$ : spectre des fréquences des deux canaux de sous-ouverture,
$X_S(r,f)$, $X_D(r,f)$ : spectre des fréquences du canal somme et du canal différence,
r : cellule à distance
f : fréquence Doppler
$\Phi_0$ : facteur correcteur de phase
$a_0$ : facteur correcteur d'amplitude,
l'estimation du facteur correcteur de phase $\Phi_0$ s'effectuant au moyen des étapes de calcul suivantes :

- calcul de la position de fréquence Doppler des échos parasites du lobe principal,
- correction des signaux du canal somme et du canal différence, un déplacement en phase du signal du canal somme et du signal du canal différence en tant que fonction de la durée de répétition d'impulsion étant effectué dans la position de fréquence nulle pour chacune des différentes portes de distance,
- filtrage des signaux du canal somme et du canal différence corrigés au moyen d'un filtre passe-bas afin de supprimer le bruit de phase à haute fréquence,
- réduction de la vitesse de balayage des signaux du canal somme et du canal différence afin de réduire le temps de traitement et/ou d'augmenter la résolution spectrale,
- transformation des signaux somme $X_S(r,t)$ et différence $X_D(r,t)$ au moyen d'une transformation rapide de Fourier à fenêtre (TRF) dans la plage des fréquences Doppler,
- calcul de la corrélation croisée des signaux somme $X_S(r,f)$ et différence $X_D(r,f)$ sur les différentes portes de distance, ce calcul étant effectué pour chaque position de fréquence Doppler,
- détermination de l'évolution de la différence de phase entre les signaux somme $X_S(r,f)$ et différence $X_D(r,f)$ à partir des corrélations calculées à l'étape 5 sur la plage de fréquences calculée de façon adaptée à l'étape 1,
- détermination du facteur correcteur de phase $\Phi_0$ par calcul de la valeur moyenne arithmétique de la différence de phase entre le canal somme et le canal différence sur la plage de fréquences des échos parasites du lobe principal calculée de façon adaptée à l'étape 1,

et l'estimation du facteur correcteur d'amplitude $a_0$ étant effectuée au moyen des étapes de calcul suivantes :

- calcul des spectres pour les deux canaux de sou-ouverture selon les équations (1) et (2) avec $a_0=1$,
- calcul d'un spectre moyen pour l'un et l'autre canal de sous-ouverture en faisant la moyenne géométrique des spectres calculés avec les équations (1) et (2) sur différentes portes de distance,
- calcul d'un spectre différentiel moyen à partir du spectre moyen de l'un et l'autre canal de sous-ouverture,
- détermination du facteur correcteur d'amplitude $a_0$ par le calcul de la valeur moyenne arithmétique de la différence sur la plage de fréquences des échos parasites du lobe principal calculée de façon adaptée à l'étape 1 du calcul de correction de phase.

2. Procédé selon la revendication 1, **caractérisé en ce que** l'estimation est effectuée sur un paquet d'impulsions de signal, une distribution de fréquences des valeurs estimées étant calculée pour chaque paquet d'impulsions et la valeur présentant la plus grande fréquence étant utilisée comme valeur estimée.

**Fig. 1**

Fig. 2

Fig. 3

**Fig. 4**

**Fig. 5**